**Europäisches Patentamt**

**European Patent Office**

**Office européen des brevets**

(19)

(11) Veröffentlichungsnummer: **0 212 445**
**B1**

# (12) EUROPÄISCHE PATENTSCHRIFT

(45) Veröffentlichungstag der Patentschrift: **30.01.91**

(21) Anmeldenummer: **86110853.8**

(22) Anmeldetag: **06.08.86**

(51) Int. Cl.⁵: **A 01 L 3/00, A 01 L 5/00, A 01 L 9/00**

(54) **Fussbekleidung für Huftiere.**

(30) Priorität: **09.08.85 CH 3429/85**

(43) Veröffentlichungstag der Anmeldung:
**04.03.87 Patentblatt 87/10**

(45) Bekanntmachung des Hinweises auf die
Patenterteilung:
**30.01.91 Patentblatt 91/05**

(84) Benannte Vertragsstaaten:
**AT BE CH DE FR GB IT LI LU NL SE**

(56) Entgegenhaltungen:
**DE-A-3 311 383
DE-C- 9 431
FR-A-2 216 911**

(73) Patentinhaber: **Rohner, Hubert
Ritterstutz 301
CH-7021 Felsberg (CH)**

(72) Erfinder: **Rohner, Hubert
Ritterstutz 301
CH-7021 Felsberg (CH)**

(74) Vertreter: **Riebling, Peter, Dr.-Ing., Patentanwalt
Rennerle 10, Postfach 31 60
D-8990 Lindau/B. (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Fusselbekleidung für Huftiere nach dem Oberbegriff des Anspruches 1.

Fussbekleidungen wurden bisher in den verschiedensten Ausführungen vor allem für Einhufer, im allgemeinen Pferde, vorgeschlagen. Beispiele für die vielen bekannten Ausführungen finden sich in der US—A—3,578,086 oder in der US—A—3,732,929; sie konnten sich aber bisher alle nicht durchsetzen, u.a. deshalb, weil sie nur bis zur Höhe des Hufes oder knapp darüber reichten, also schuhartig ausgebildet waren. Nun kam es immer wieder leicht vor, dass der Huf aus dem "Schuh" rutschte, weil seine Seitenwände zu niedrig waren und/oder die Hinterkappe nicht genügend fest sitzen konnte. Einer Erhöhung der Hinterkappe stand bisher entgegen, dass der Huf an der Vorderseite relativ hoch ist, während an der Rückseite die Rudimente zweier Zehen (der Huf ist eine verstärkte Mittelzehe) vorliegen, die relativ weich und empfindlich sind.

Einen ähnlich den beiden US Patentschriften ausgebildeten Pferdeschuh beschreibt die DE—A1—3311383. Dort wird der an seiner Vorderseite mit Schlitzen versehene Schuh mittels Festziehbändern, der Hufform angepasst, am Huf befestigt. Um das zu erreichen—Pferdhufe können im rückwärtigen Bereich sehr niedrig sein—wird eine Verlängerung des Schaftteils über den Kronrand es Hufs hinaus notwendig. Damit werden unumgänglich die Zehenrudimente zumindest berührt und die Bewegung des Pferdefusses, eventuell auch auf schmerzhafte Weise behindert.

Mit den bisherigen Vorschlägen, den Hufbekleidungsteil nach oben zu verlängern, etwa gemäss der DE—PS—9431, konnte das Ziel nicht erreicht werden, weil die Hinterseite der Fussbekleidung, gegebenenfalls mit ihrer Oberkante, gegen diese weichen, empfindlichen Teile drückte und das Tier bald zu lahmen begann.

Aus der FR—A—2216911 aus der die Merkmale des Oberbegriffs des Anspruchs 1 bekannt sind, ist eine Fussbekleidung für Tiere bekannt, und zwar ausschliesslich für Paarhufer, die auch eine Befestigungseinrichtung im Bereich der Fesseln vorsieht, doch ist die Befestigungseinrichtung für sich allein nicht wirksam und für Pferde nicht besonders gut geeignet. Ist hier auch die Möglichkeit vorgesehen, den Schaft dieser Fussbekleidung zu verlängern, so ist in jedem Fall ein verstärkter Rückenteil vorgesehen, der fast bis in die Fesselhöhlung reicht, damit aber in jedem Fall die Zehenrudimente überdeckt, und diesen empfindlichen Teil in der Bewegung störend behindert.

Der Erfindung liegt daher die Aufgabe zu grunde, die genanten Nachteile bekannter Fussbekleidungen für Huftiere zu vermeiden und diese nach Möglichkeit so auszubilden, dass sie sich als Ersatz für einen Beschlag, gegebenenfalls aber auch für die Behandlung kranker Tiere eignen. Diese Aufgabe wird erfindungsgemäss durch die im Kennzeichen des Anspruches 1 angegebenen Massnahmen gelöst. Bevorzugte Ausführungsformen sind in den Kennzeichen der Unteransprüche beschrieben.

Die Oberkante der Hinterwand endet unterhalb der Zehenrudimente, so daß die Befestigung in der Fesselbeuge erfolgen kann, die einerseites weniger empfindlich ist, und in der andererseits ein besserer Halt gegen ein ungewolltes Herausrutschen des Hufes aus der Fussbekleidung möglich wird. Damit wird aber die Fussbekleidung für das Tier verträglich, so dass sogar kranke Tiere damit versehen werden können. So ist es etwa für von der Maul- und Klauenseuche befallene Kühe denkbar, ein Behandlungsmittel an einem Schwamm, einem Tuch oder Watte auf die Innenseite der Sohlenfläche zu legen, die hiezu vorzugsweise geschlossen ist, und so eine ständige Einwirkung des Mittels zu gewährleisten, während gleichzeitig gesichert ist, dass die Infektion nicht über den unabgeschirmten Huf so leicht überall hingetragen wird.

Für bestimmte Anwendungsfälle mag es zweckmässig sein, in der Sohle, vorzugsweise zwischen den Stollen, Durchbrüche anzuordnen, durch die in den Schuh von oben gelangte Fremdkörper wie Staub, Sand etc., bzw. Wasser, wieder nach unten austreten können.

Ausserdem hat man heute Kunststoffmaterialien in der Hand, die nicht nur ausserordentlich abriebfest sind, sondern ausserdem genügend Elastizität aufweisen, um die Fussgelenke eines Pferdes selbst beim Reiten auf hartem Untergrund wesentlich besser zu schonen, als dies mit Hufeisen der Fall ist.

Des weiteren waren bei bisherigen Fussbekleidungen keine Vorkehrungen getroffen, um sie an verschiedene Höhen und Umfänge an der Oberkante des Hufs anpassen zu können, so dass an sich die Anfertigung und Lagerhaltung verschiedenster Grössen auch diesbezüglich (nicht nur in Bezug auf die Standfläche) erforderlich gewesen wäre. Je nach Umfang der Fesseln kann der "Stiefelschaft", d.h. der Fesselabschnitt, mit Hilfe eines Schlitzes mehr oder weniger eng gemacht werden. Sollte es sich um einen Huf geringer Höhe handeln, so kann eine Anpassung leicht dadurch erzielt werden, dass unterhalb des Schlitzes zumindest ein Sollschnittende im Material zur allfälligen Verlängerung des Schlitzes vorgesehen ist, welches Sollschnittende zweckmässig durch ein Loch unterhalb des Endes des Schlitzes gebildet ist. Mit anderen Worten: es soll der Schlitz leicht verlängerbar sein, wobei aber dafür Sorge zu tragen ist, dass ein Einreissen möglichst vermieden wird. Deshalb soll wenigstens das Ende eines solchen Verlängerungsschnittes vorgegeben sein, wobei es selbstverständlich möglich ist, eine vollständige Sollschnittlinie vorzusehen. Derartige Soll-Schnittlinien können in bekannter Weise in Form von Materialschwächungen (Perforationen, verdünnte Wandstärken, Einlagerung schwächeren Materiales) oder in Form bloss angezeichneter Schnittlinien vorgesehen sein. Wird das Sollschnittende von einem Loch gebildet, so kann ein Einreissen wirkungsvoll verhindert werden.

An sich mag die Befestigungseinrichtung beliebig ausgebildet sein, wie ja auch in der Schuhindustrie die verschiedensten Einrichtungen (Schnallen, Spannverschlüsse, Bänder, Riemen usw.) bekannt geworden sind. Es ist jedoch bevorzugt, wenn der Fesselabschnitt Halterungen, insbesondere in Form von Öffnungen (im Gegensatz dazu zeigt beispielsweise die US—A—3 732 929 Haken), für wenigstens ein als Befestigungseinrichtung dienendes Zugmittel, wie Riemen oder Band, aufweist. Diese Öffnungen können mit Ösenringen verstärkt sein und sind—im bevorzugten Falle eines Riemens oder Bandes—zweckmässig in senkrechter Richtung länglich ausgebildet. Dabei ist ein flaches Zugmittel, wie ein Riemen oder Band, deswegen vorteilhafter, weil sich die Druckkräfte besser verteilen und ein Einschnüren eher vermieden ist.

Wegen der erwünschten Anpassbarkeit an verschiedene Grössen ist es bei einer solchen Ausbildung der Halterung vorteilhaft, wenn zumindest stellenweise, insbesondere gegen die Rückseite zu, wenigstens zwei Halterungen untereinander zum wahlweisen Anbringen des Zugmittels in verschiedenen Höhen vorgesehen ist. Dies kann an sich so erfolgen, dass wenigstens zwei um den Fesselabschnitt herumlaufende Reihen solcher Halterungen vorgesehen sind. Einfacher und sicherer ist jedoch eine Ausführung, bei der vor den gegen die Rückseite zu angebrachten wenigstens zwei Halterungen in Form von Öffnungen eine Schlitzöffnung vorgesehen ist, über die das an der Vorderseite durch eine Öffnung im oberen Bereich des Fesselabschnittes geführte Zugmittel abwärts lenkbar ist. Dadurch werden mehrere Öffnungen an der Vorderseite vermieden, die ja auch eine gewissen Materialschwächung bedeuten. Überdies wird so die Konstruktion vereinfacht.

Falls dan bei einem kleineren Tier die untere Halterung benützt wird, steht der obere Teil frei ab und kann stören. Deshalb ist es günstig, wenn zwischen den untereinander und gegen die Rückseite zu angebrachten Öffnungen eine Sollschnittstelle im Material gegeben ist, die zwischen den Öffnungen hindurch nach vorne zu zum oberen Rand des Fesselabschnittes führt. Über die Ausbildung solcher Sollschnittstellen wurde oben ja bereits gesprochen.

Gerade wegen der erwähnten weichen und empfindlichen Teile des Huftieres ist es nun aber zweckmässig, wenn die Hinterwand einen vom oberen Rand des Fesselabschnittes nach unten reichenden Ausschnitt besitzt, und dass vorzugsweise, wenigstens im Ansatz, zumindest eine Sollschnittstelle zum Verkürzen der verbleibenden Hinterwand vorgesehen ist. So können die empfindlichen Teile unbedeckt bleiben, und es ist zur Anpassung an unterschiedlich grosse Tiere vorzugsweise möglich, die Hinterwand verschieden hoch zu formen.

Ein besseres Anschmiegen des Fesselabschnittes trotz hoher Festigkeit der Hufbekleidung ergibt sich dadurch, dass zumindest an der Vorderseite die Wandstärke des Fesselabschnittes geringer als die des Hufbekleidungsteiles ist, wobei insbesondere die beiden Wandabschnitte einen ineinander verlaufenden Übergang aufweisen, so dass störende Knickstellen des Materiales vermieden werden.

Auf diese Weise kann die Arbeit des Hufschmiedes durch diejenige des Schuherzeugers ersetzt werden, wobei die Herstellung einer solchen Fussbekleidung aus Kostengründen am besten aus Kunststoff, beispielsweise im Spritzguss, erfolgt. Nichtsdestoweniger mögen die an empfindlicheren Stellen des Tieres anliegenden Teile auch gepolstert bzw. mit einem Schaumgummibelag oder Schaumstoffbelag versehen sein.

Weitere Einzelheiten ergeben sich am Hand der nachfolgenden Beschreibung eines in der Zeichnung schematisch dargestellten Ausführungsbeispieles. Es zeigen:

Fig. 1 einen Schnitt durch eine derartige Fussbekleidung nach den Linien I—I der Fig. 2 und 3,

Fig. 2 eine Draufsicht,

Fig. 3 eine Ansicht von der Rückseite, und

Fig. 4 eine Vorderansicht der Fussbekleidung nach Fig. 1,

Fig. 5 einen Schnitt durch eine andere Ausführungsform der Beschreibung.

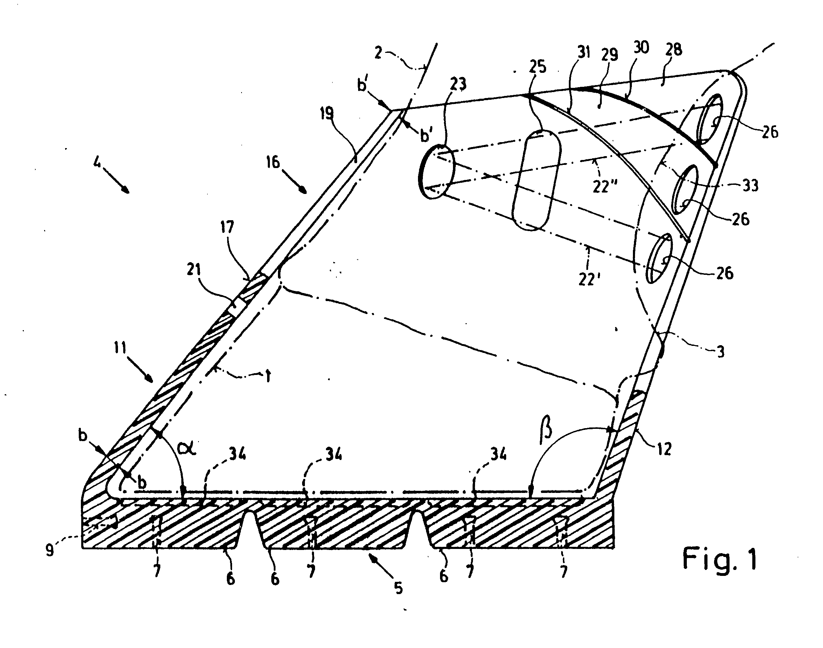

In Fig. 1 ist strich-punktiert ein Huf 1 samt der daran anschliessenden Fessel 2 eines Einhufers, namentlich eines Pferdes angedeutet. Der Huf 1 ist vorne (links in Fig. 1) etwas höher, wogegen an der Rückseite ein paariger, druckempfindlicher Teil 3 vorragt.

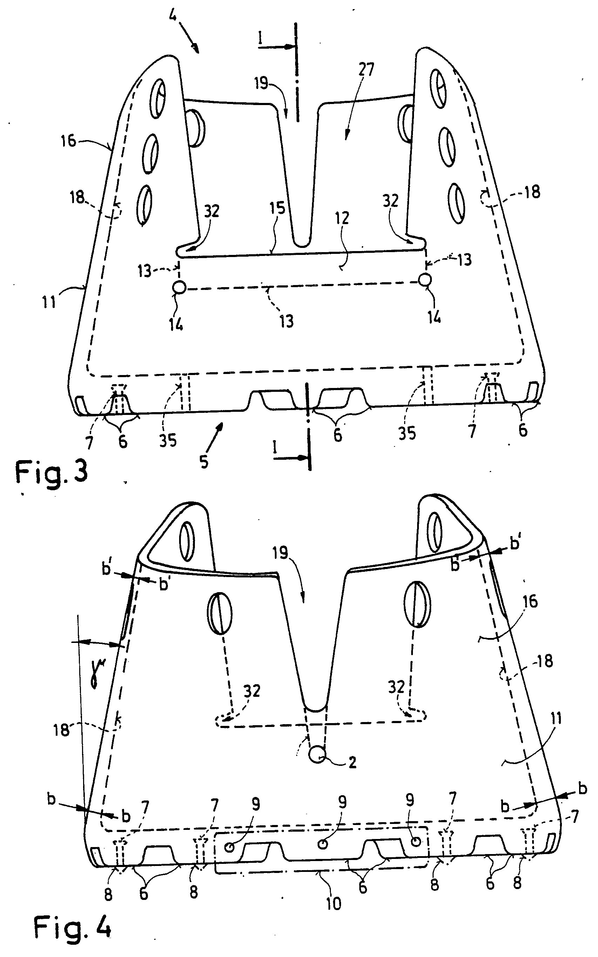

Von diesen Gegebenheiten ausgehend weist eine dazugehörige Fussbekleidung 4 eine Sohlenfläche 5 auf, die vorzugsweise die ganze Unterseite des Hufes 1 bedeckt. Diese Sohlenfläche 5 weist zweckmässig nach Art eines Schuhes vorragende Materialstollen 6 auf, wie es auch aus dem Stande der Technik bekannt ist, kann aber darüber hinaus noch mit Vertiefungen 7 versehen sein, in die Metallstollen oder -spikes 8 (in Fig. 4 strich-punktiert angedeutet) einsetzbar sind. Ferner kann die Innenseite der Sohle 5 flache Vertiefungen aufweisen (z.B. im Bereiche der Materialstollen 6), in die für therapeutische Zwecke Tampons mit einem Behandlungsmittel einlegbar sind, obwohl dies auch ohne derartige Vertiefungen geschehen kann, etwa um bei Paarhufern die Maul- und Klauenseuche zu bekämpfen, die durch die allseitig geschlossene Gestaltung der Fussbekleidung 4 auch am Ausbreiten gehindert werden kann.

Eine bekannte, bei Pferden oft zu beobachtende Fehlhaltung besteht darin, dass das Tier einen Hinterhuf an dessen Vorderkante aufstützt, was in manchen Gegenden als "Schlarken" bezeichnet wird. Zum Schutze der Fussbekleidung vor dadurch entstehendem Abrieb und Beschädigungen ist es zweckmässig, wenn zumindest eine, gegebenenfalls wenigstens zwei, im vorliegenden Falle drei nach vorne weisende Vertiefungen 9 zum Einsetzen eines einzigen nach vorne gerichteten Beschlages oder einer entsprechenden Anzahl solcher Beschläge, entsprechend den Stollen oder Spikes 8 in Fig. 4, vorgesehen sind. In Fig. 4 ist strichpunktiert eine Beschlagsplatte 10 angedeutet, die über drei in die Vertiefungen 9 einsetzbare Stifte verfügen kann und der Rundung im vorderen Bereich angepasst ist.

An die Sohlenfläche 4 schliesst sich in bekannter Weise ein den Huf 1 bedeckender Hufbekleidungsteil 11. Dieser Hufbekleidungsteil 11 besitzt vorzugsweise eine Hinterwand 12, die die empfindlichen, rudimentären Zehen 3 des Tieres frei lässt. Um dabei eine Anpassung an verschiedene Höhen des Hufes 1 an der Rückseite zu ermöglichen, ist die ganze Fussbekleidung zweckmässig aus einem giessbaren Material, wie Kunststoff, hergestellt und besitzt an der Rückseite (Fig. 3) vorzugsweise wenigstens eine Sollschnittstelle 13, die zumindest durch die Ecken dieser Sollschnittstelle 13 bezeichnende Löcher 14 angedeutet ist. Die Sollschnittlinie kann gegebenenfalls durch eine Materialverdünnung vorgegeben sein, wie dies später an Hand anderer Sollschnittlinien noch gezeigt werden wird. Selbstverständlich sind aber auch noch andere Konstruktionen möglich. Beispielsweise kann die Innenseite der Fussbekleidung mit einem Textilstoff gefüttert sein, wobei das Kunststoffmaterial zwischen dem oberen Rand 15 und der Sollschnittlinie 13 einen bereits entlang der Linie 13 durchtrennten Riemen bildet, so dass nur mehr das Futter aufgeschnitten werden muss. Analog dazu kann die Materialschwächung entlang der Linie auch durch eingelagertes schwächers Material gebildet sein, und es ist ebenso möglich, entlang der Schnittlinie 13 einen Aufreissfaden vorzusehen, um ein einfaches Aufreissen an Stelle eines Schnittes vorzusehen, obwohl damit die Gefahr unscharfer Ränder verbunden ist, die zu Hautreizungen des Tieres führen könnten.

An den Hufbekleidungsteil 4, der gewissermassen einem "Schuh" entspricht, schliesst sich ein einem "Stiefelschaft" entsprechender Fesselabschnitt 16, der die Fesseln 2 (Fig. 1) des Tieres zumindest teilweise bedeckt an. Zweckmässig ist ein fliessender, stufenfreier Übergang vom Hufbekleidungsteil 11 zum Fesselabschnitt 16 vorgesehen, so dass die Vorderwand 17 der beiden Teile 11, 16, aber auch die Seitenwände 18 (vgl. Fig. 3, 4) zumindest ineinander verlaufende Übergänge aufweisen.

Die so über beide Teile 11, 16 verlaufende Vorderwand 17 nimmt zweckmässig zur Ebene der Sohlenfläche 5 oder einer dazu parallelen Ebene einen Winkel ein, der grösser oder wenigstens gleich 45° ist. Bevorzugt beträgt dieser Winkel alpha etwa 50° oder mehr, z.B. zwischen 50° und 60°. Damit kann eine Anpassung an die meisten Hufformen erreicht werden. Dagegen ist es aus dem gleichen Grunde vorteilhaft, wenn der Winkel beta, den die Hinterwand 12 mit der Ebene der Sohlenfläche 5 einschliesst mehr als 90°, vorzugsweise wenigstens 100° und insbesondere etwa 110° beträgt.

Diese Winkel verflachen allerdings an den Seiten gegen die Senkrechte, wo sich gemäss Fig. 4 ein Winkel gamma ergibt, der zweckmässig etwa 10° bis 15°, z.B. zwischen 11° und 13°, betragen kann, wobei dieser Winkel, wie ersichtlich, zu einer lotrechten Ebene gemessen ist.

Um, besonders im Hinblick auf die später noch zu beschreibende Befestigungseinrichtung, ein Anschmiegen des Fesselteiles 16 an die Fesseln 2 des Tieres zu ermöglichen, sind mehrere Massnahmen vorgesehen. Einerseits wird die untere Wandstärke wenigstens eines Wandabschnittes 17 bzw. 18 entsprechend dem Masse b—b grösser bemessen als die obere Wandstärke b'—b', so dass sich die jeweilige Wand 17 bzw. 18 keilförmig nach oben verjüngt.

Die Keilform ist allerdings besonders bevorzugt, doch könnte die Ausbildung auch so erfolgend, dass der Hufteil 11 eine grössere Wandstärke besitzt als der Fesselabschnitt 16, wobei beide Wandstärken bis auf einen relativ breiten Übergangsabschnitt im wesentlichen gleichmässig sind, der Übergangsabschnitt aber keilförmig verläuft. So ist die Keilform wenigstens über einen Teil der Höhe der jeweiligen Wand 17 bzw. 18 günstig, wobei eine Keilform über die gesamte Länge auch noch bei der Herstellung für die Entformung Vorteile ergibt.

Eine weitere Massnahme, die eine Anpassung an verschiedene Umfänge der Fesseln 2 (Fig. 1) erlaubt, besteht darin, dass zumindest ein sich in Höhenrichtung des Fesselabschnittes 16 erstreckender Schlitz 19 vorgesehen ist, der vorzugsweise etwa V-förmig, zweckmässig mit gerundetem Boden des V, ausgebildet ist. Die beiden Schenkel des V schliessen vorzugsweise miteinander einen Winkel zwischen 10° und 20°, insbesondere annähernd 15°, ein.

Diese Bemassung erlaubt es, mit wenigen Standardgrössen auszukommen, wobei eine Anpassung lediglich mit Hilfe einer von einem Zugmittel gebildeten Befestigungseinrichtung erfolgen kann, ohne dass es zu einer störenden Faltenbildung kommt.

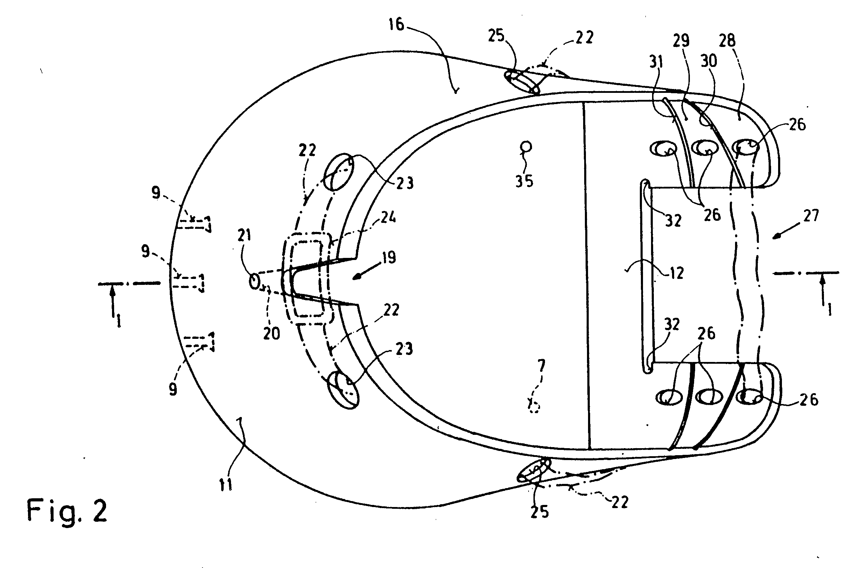

Auch hier wird es wieder erwünscht sein, eine Anpassung an unterschiedliche Höhen des Hufes 1 (Fig. 1) vornehmen zu können. Zu diesem Zwecke kann der Schlitz 19i erweitert werden, was durch eine entsprechende Sollschnittstelle 20 erzielbar ist (Fig. 2, 4), doch ist es zweckmässig, wenigstens ein Sollschnittende in Form eines Loches 21 vorzusehen. Das Sollschnittende ist deshalb von besonderer Bedeutung, weil es bei einem blossen Einschnitt leicht bei schon geringen Beanspruchungen, etwa während des Anlegens, zum Einreissen kommen kann, so dass die Fussbekleidung 4 unbrauchbar würde. Selbstverständlich können auch mehrere Löcher 21 untereinander vorgesehen sein, wobei die Ausbildung so getroffen sein kann, dass diese Löcher dann unterschiedliche Dimensionen aufweisen, etwa indem das jeweils untere Loch einen grösseren Durchmesser besitzt, als das Loch darüber.

Es wurde oben bereits erwähnt, warum zur Befestigung ein Zugmittel, wie Band oder Riemen, besonders bevorzugt ist. Allerdings können auch andere Befestigungseinrichtungen Anwendung finden, wie sie einerseits aus dem unmittelbaren, Hufbekleidungen betreffenden Stande der Technik ebenso bekannt geworden sind, wie aus dem weiteren Stande der Technik, nämlich den Fussbekleidungen überhaupt. In den Fig. 1 und 2 ist nun ein solches Zugmittel in Form eines flachen Zugmittels bzw. eines Bandes 22 strichpunktiert angedeutet. Es wird an der Vorderseite durch zwei seitliche Öffnungen 23 herausgezogen und kann mit Hilfe einer Schnalle 24 od. dgl. an sich bekannter Art befestigt werden. Entsprechend der bevorzugten Ausbildung des Zugmittels 22 als flaches Band sind die Öffnungen 23 länglich bis schlitzförmig.

Das Band 22 mag sich dann an den Seiten der Fussbekleidung 4 nach innen erstrecken, wie dies Fig. 1 zu entnehmen ist. Über eine längliche, schlitzartige Öffnung 25 grösserer axialer Länge tritt dann das Band 22 wieder nach aussen, um in der aus Fig. 2 ersichtlichen Weise durch eines von drei übereinander angeordneten Öffnungen 26 geführt zu werden.

Diese drei (oder wenigstens zwei) Öffnungen 26 dienen wiederum der Anpassung an verschiedene Grössen. Dadurch, dass nun die Befestigung mit Hilfe des Bandes 22 in einem von den empfindlichen Teilen 3 entfernten Bereich an den Fesseln 2 erfolgt, sind die Hauptgründe dafür beseitigt, warum die bisherigen Fussbekleidungen sich in der Praxis nicht durchsetzen konnten. Zur Anpassung an verschiedene Hufhöhen könnten an sich rundherum wenigstens zwei Reihen von Öffnungen 23, 25, 26 untereinander vorgesehen sein. Dies hätte aber mehrere Folgen: Einerseits würde dadurch das Material mehr geschwächt, als dies bei der dargestellten Ausführung der Fall ist. Die Folge wäre wohl, dass die Materialstärke dicker gewählt werden müsste, was sich auf die Biegsamkeit nachteilig auswirkte. Anderseits wären beim Formvorgang zusätzliche Kernzüge erforderlich, was die Herstellkosten erhöhen würde.

Um also mit jeweils einer einzigen Öffnung 23 bzw. 25 auszukommen und dennoch das Band 22, je nach Hufgrösse ohne Knick einer der drei Öffnungen 26 zuzuführen, ist die davor liegende Öffnung 25 als verlängerte Schlitzöffnung ausgebildet, deren Dimensionen durch einen wenigstens annähernd gestreckten Verlauf des Bandes 22 von der Öffnung 23 zur obersten bzw. untersten Öffnung 26 definiert sind. Diese beiden Extremlagen des Bandes 22 sind in Fig. 1 als strichpunktierte Position 22' und als strich-punktpunktierte Lage 22" angedeutet.

Wird nun das Band 22 nicht durch die oberste Öffnung 26, sondern durch die darunter liegende oder die unterste Öffnung 26 gezogen, so würde der darüber befindliche Teil der Hinterwand 12, der vorzugsweise einen Ausschnitt 27 (vgl. Fig. 2, 3) begrenzt, als blosser Lappen abstehen und könnte stören. Deshalb ist es günstig, diesen verbleibenden Lappen 28 bzw. 29 abzutrennen. Um dies zu erleichtern und gleich auch die optimale Schnittführung anzuzeigen, sind vorzugsweise Sollschnittlinien 30, 31 vorgegeben, die in der dargestellten Ausführung durch Materialschwächungen von der Innenseite der Fussbekleidung 4 her gegeben sind.

Der erwähnte Ausschnitt 27 hat eine doppelte Funktion. Einerseits, soll—wie erwähnt—der empfindliche Teil 3 (Fig. 1) des Tieres möglichst druckfrei gehalten werden, anderseits ermöglicht der Ausschnitt 27 ein faltenfreies Zusammenziehen, ähnlich wie der Schlitz 19 an der gegenüberliegenden Vorderseite, und es ist daher verständlich, dass gewünschtenfalls auch an den Seiten zusätzliche Schlitze ähnlich dem Schlitz 19 vorgesehen sein könnten, obwohl sich die dargestellte Anordnung in der Praxis vortrefflich bewährt hat. Eine weitere Massnahme zur Verbesserung der Biegsamkeit der durch den Ausschnitt 27 verbleibenden Lappen der Hinterwand 12 besteht darin, dass etwa parallel zur Sohlenfläche 5 verlaufende Einschnitte 32 (Fig. 2, 3) vorgesehen sind.

Im Rahmen der Erfindung sind zahlreiche Modifikationen möglich; so wurde bereits erwähnte, dass die Innenseite der Fussbekleidung 4, beispielsweise oberhalb der Öffnungen 23 und 25 und/oder darunter gewünschtenfalls gepolstert sein können. Eine ähnliche Polsterung, z.B. aus Schaumstoff, kann an der Innenseite des Bandes 22, insbesondere wenigstens in dem, gegebenenfalls verbreiterten, die Ausnehmung 27 überbrückenden Abschnitt, vorgesehen sein. Ferner ist es möglich, die Halterung für das Band 22 statt durch die Öffnungen 23, 25 und 26 durch entsprechende, an der Aussenseite angebrachte Haken oder Ösen in ähnlicher Weise zu gewährleisten, wie es die US—A—3 732 929 vorschlägt, obwohl die dargestellte Ausführung nicht nur einfacher in der Herstellung, sondern auch sicherer ist. Dabei können die Öffnungen 23, 25 bzw. 26 gewünschtenfalls auch verstärkt sein, entweder durch einen verdickten Materialrand oder durch eingezwickte Metallösen.

Eine weitere Variante könnte darin liegen, dass die Vertiefungen 7 statt für einzelne Spikes 8 zum Einsetzen von Befestigungsstiften einer, oder mehrerer kleinerer, Beschlagskörper, z.B. Beschlagsplatten mit vorspringenden Stollen, ausgenützt werden. Selbstverständlich kann auch das Sohlenprofil beliebig ausgebildet sein.

Aus den obigen Erläuterungen des Schlitzes 19 mag in Verbindung mit der Zeichnung ersichtlich sein, dass sich der Schlitz 19 vorzugsweise im wesentlichen über die gesamte Länge des Fesselabschnittes 16 erstreckt, obwohl hier eine gewisse Toleranz nach unten oder oben zulässig ist. Zumindest soll sich aber der Schlitz 19 über einen Teil der Länge bzw. Höhe des Fesselabschnittes 16 erstrecken. Weil gerade in diesem Bereiche der Vorderwand 17 die Anpassung an verschiedene anatomische Ausbildungen wichtig ist, ist es auch besonders günstig, wenigstens dort den beschriebenen Unterschied der oberen und unteren Wandstärken b—b bzw. b'—b' vorzusehen.

Es kann erwünscht sein, die Sohlenfläche 5, den Hufbekleidungsteil 11 und/oder den Fesselabschnitt 16 mit zusätzlichen Öffnungen, Schlitzen bzw. Ausschnitten zu versehen, um die Hautatmung, besonders im Fesselbereich zu begünstigen, so dass letztlich diese Teile bzw. Abschnitte den jeweiligen Körperteil des Tieres nur mehr teilweise abdecken.

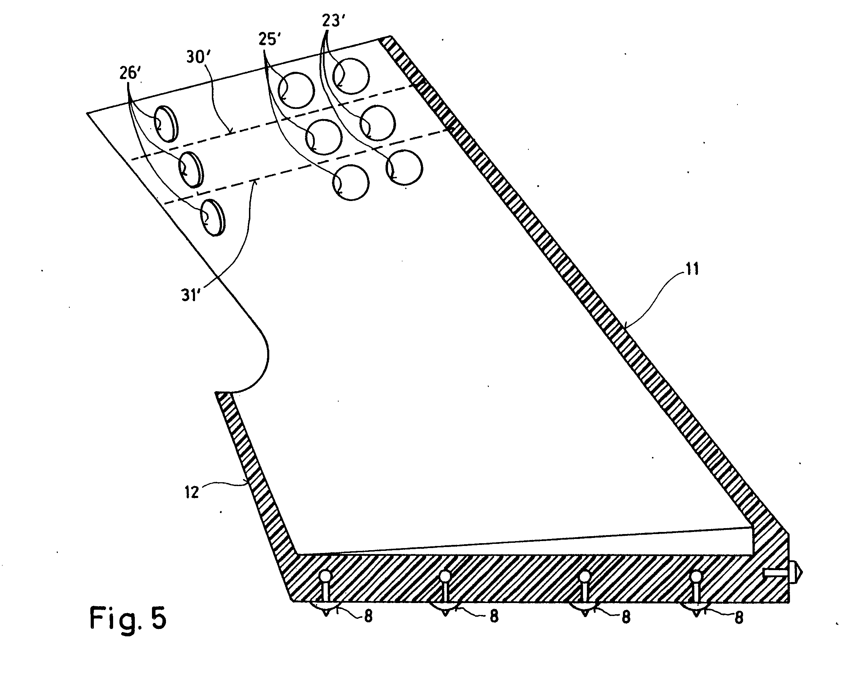

Fig. 5 zeigt eine andere Ausführungsform der Erfindung im Schnitt analog Fig. 1, wobei allerdings die vorderen und mittleren Halterungsöffnungen, hier mit 23' und 25' bezeichnet je dreifach, in Linie mit den hinteren Halterungsöffnungen 26' angeordnet sind. Unterhalb der oberen und unteren Reihe von Halterungsöffnungen 23', 25', 26' befinden sich Sollschnittlinien 30' und 31', die zur Verkürzung der Fussbekleidung für mittlere oder niedrigere Hufe, bzw. Fesselabschnitte entsprechender Tierfüsse dienen.

**Patentansprüche**

1. Fussbekleidung für Huftiere, mit einem an die Sohle (5) anschliessenden, rundum geschlossenen Hufbekleidungsteil (11) der die vollständige Abdeckung des Hufes ermöglicht, gekennzeichnet durch eine Kombination folgender Merkmale:

die vordere Wand und die seitlichen Wände des Hufbekleidungsteils (11) sind als Fesselabschnitt (16) nach oben verlängert, so daß diese

Verlängerung—im angelegten Zustand—die Abdeckung des vorderen und seitlichen Fesselbereichs des Hufes ermöglicht;

die Hinterwand (12) des Hufbekleidungsteils (11) weist von der Sohle (5) weg schräg nach hinten und ist so ausgelegt, daß sie—im angelegten Zustand—bis unterhalb der Zehenrudimente (3) reicht;

der Fesselabschnitt (16) trägt eine Befestigungseinrichtung (22), die so ausgelegt ist, daß sie—im angelegten Zustand—in der Fesselbeuge (33) angreift.

2. Fussbekleidung nach Anspruch 1, dadurch gekennzeichnet, dass die Hinterwand (12) zumindest eine Sollschnittstelle (13) und/oder zumindest zwei Löcher (14) zum Erniedrigen der Höhe aufweist.

3. Fussbekleidung nach Anspruch 2, dadurch gekennzeichnet, dass die Hinterwand (12) zur Sohle (5) einen Winkel (beta) von mehr als 90 Grad, vorzugsweise mehr als 100 Grad, insbesondere von etwa 110 Grad einschliesst.

4. Fussbekleidung nach einem der vorangehenden Ansprüche, dadurch gekennzeichnet, dass der Fesselabschnitt (16) zumindest einen, sich über wenigstens einen Teil seiner Länge erstreckenden und vorzugsweise an der Vorderseite angeordneten Schlitz (19) aufweist.

5. Fussbekleidung nach Anspruch 4, dadurch gekennzeichnet, dass unterhalb des Schlitzes (19) zu dessen allfälliger Verlängerung zumindest ein Sollschnittende (21) vorgesehen ist, das zweckmässig durch ein Loch unterhalb des Endes des Schlitzes (19) gebildet ist.

6. Fussbekleidung nach einem der vorhergehenden Ansprüche, an der Halterungen für wenigstens ein als Befestigungseinrichtung dienendes Zugmittel vorgesehen sind, dadurch gekennzeichnet, dass zumindest stellenweise, insbesondere an der Hinterkante der Seitenwand, wenigstens zwei Halterungen (26) untereinander zum wahlweisen Anbringen des Zugmittels (22) in verschiedenen Höhen vorgesehen sind, und dass zweckmässig zwischen den Halterungen (26) zumindest eine Sollschnittstelle (30, 31) in der Seitenwand gegeben ist, die zwischen den Halterungen (26) hindurch zum oberen Rand des Fesselabschnittes (16) führt.

7. Fussbekleidung nach Anspruch 6, dadurch gekennzeichnet, dass vor den Halterungen (26) eine Schlitzöffnung (25) vorgesehen ist, über die das an der Vorderseite durch eine Öffnung (23) im oberen Bereich des Fesselabschnittes (16) geführte Zugmittel (22) den untereinander liegenden Öffnungen (26) zuführbar ist.

8. Fussbekleidung nach einem der vorhergehenden Ansprüche, dadurch gekennzeichnet, dass die Sohle (5) zumindest eine vertikale (7) und/oder zumindest eine an der Fussbekleidungsvorderkante angeordnete horizontale (9) Vertiefung zur Aufnahme einer Bewehrung aufweist.

9. Fussbekleidung nach einem der vorhergehenden Ansprüche, dadurch gekennzeichnet, dass an der Innenfläche der Sohle (5) Vertiefungen (34) für die Aufnahme von Polstern, Medikamenten od. dgl. angeordnet sind.

10. Fussbekleidung nach einem der vorhergehenden Ansprüche, dadurch gekennzeichnet, dass in der Sohle (5) Durchbrüche (35) zur Entfernung eingedrungener fester oder flüssiger Fremdkörper angeordnet sind.

**Revendications**

1. Chaussure pour animaux à sabots, comportant, relié à la semelle (5), un élément de revêtement de sabot (11) fermé de toutes parts, qui permet de recouvrir entièrement le sabot, caractérisée par une combinaison des caractéristiques suivantes:

la paroi avant et les parois latérales de l'élément de revêtement de sabot (11) se prolongent vers le haut sous la forme d'un tronçon pour paturon (16), de telle manière que ce prolongement permet, à l'état posé, de recouvrir la zone de paturon avant et latérale du sabot;

la paroi arrière (12) de l'élément de revêtement de sabot (11) se dirige obliquement depuis la semelle (5) vers l'arrière et est conçue pour, à l'état posé, s'étendre jusqu'au-dessous des rudiments de doigts (3);

le tronçon pour paturon (16) porte un dispositif de fixation (22) conçu pour, à l'état posé, venir en prise dans le creux de paturon (33).

2. Chaussure selon la revendication 1, caractérisée en ce que, pour diminuer sa hauteur, la paroi arrière (12) présente au moins un point destiné à être coupé (13) et/ou au moins deux trous (14).

3. Chaussure selon la revendication 2, caractérisée en ce que la paroi arrière (12) délimite par rapport à la semelle (5) un angle (beta) supérieur à 90 degrés, de préférence, supérieur à 100 degrés, notamment égal environ 110 degrés.

4. Chaussure selon l'une des revendications précédentes caractérisée en ce que le tronçon pour paturon (16) comporte au moins une fente (19) qui s'étend sur une partie au moins de sa longueur et est, de préférence, disposée au niveau du côté avant.

5. Chaussure selon la revendication 4, caractérisée en ce qu'au-dessous d'une fente (19), il est prévu, pour pouvoir prolonger celle-ci dans tous les cas, au moins une extrémité destinée à être coupée (21) qui, d'une manière appropriée, est constituée par un trou situé au-dessous de l'extrémité de la fente (19).

6. Chaussure selon l'une des revendications précédentes, sur laquelle sont prévues des attaches pour au moins un moyen de tension servant de dispositif de fixation, caractérisée en ce qu'il est prévu, tout au moins par endroits, notamment au niveau du bord arrière de la paroi latérale, au moins deux attaches (26) disposées l'une au-dessous de l'autre, en vue de placer sélectivement le moyen·de tension (22) à différentes hauteurs, et en ce que dans la paroi latérale, d'une manière appropriée entre les attaches (26), il est prévu au moins un point destiné à être coupé (30, 31) qui, en passant entre les attaches (26), va jusqu'au bord supérieur du tronçon pour paturon (16).

7. Chaussure selon la revendication 6, caractérisée en ce qu'avanat les attaches (26), il est prévu une ouverture en forme de fente (25) par l'intermédiaire de laquelle le moyen de tension (22) dirigé, au niveau du côté avant, à travers une ouverture (23) ménagée dans la zone supérieure du tronçon pour paturon (16), peut être admis dans les ouvertures (26) disposées l'une au-dessous de l'autre.

8. Chaussure selon l'une des revendications précédentes, caractérisée en ce qu'en vue de recevoir une armature, la semelle (5) comporte au moins un renfoncement vertical (7) et/ou au moins un renfoncement horizontal (9) disposé au niveau du bord avant de la chaussure.

9. Chaussure selon l'une des revendications précédentes, caractérisée en ce que, dans la surface intérieure de la semelle (5), il est prévu des renfoncements (34) destinés à recevoir un rembourrage, des médicaments ou des substances similaires.

10. Chaussure selon l'une des revendications précédentes, caractérisée en ce que, dans la semelle (5), il est prévu des perçages (35) destinés à éliminer des corps étrangers solides ou liquides introduits.

## Claims

1. Foot gear for hoofed animals, with a hoof covering part (11) joining on to the sole (5) and closed on all sides, which part makes it possible to completely cover the hoof, characterized by a combination of the following features:

the front wall and the lateral walls of the hoof covering part (11) are extended upwards as pastern section (16), so that this extension—when being worn—makes it possible to cover the front and lateral pastern region of the hoof;

the rear wall (12) of the hoof covering part (11) is directed obliquely toward the rear away from the sole (5) and is designed such that—when being worn—it extends to beneath the rudimentary toe (3);

the pastern section (16) carries an attachment device (22), which is designed such that—when being worn—it engages in the pastern bend (33).

2. Foot gear according to Claim 1, characterized in that the rear wall (12) has at least one nominal intersection site (13) and/or at least two holes (14) to lower the height.

3. Foot gear according to Claim 2, characterized in that the rear wall (12) forms with the sole (5) an angle (beta) of more than 90 degrees, preferably more than 100 degrees, in particular of approximately 110 degrees.

4. Foot gear according to one of the preceding claims, characterized in that the pastern section (16) has at least one slit (19) extending over at least a part of its length and preferably arranged on the front side.

5. Foot gear according to Claim 4, characterized in that beneath the slit (19), for its possible extension, at least one nominal intersection end (21) is provided, which is expediently formed by a hole beneath the end of the slit (19).

6. Foot gear according to one of the preceding claims, on which mountings are provided for at least one drawing means serving as attachment device, characterized in that at least in places, in particular on the rear edge of the lateral wall, at least two mountings (26) are provided one beneath the other for the selective arrangement of the drawing means (22) at different heights, and that expediently between the mountings (26) at least one nominal intersection site (30, 31) is given in the lateral wall, which leads through between the mountings (26) to the upper margin of the pastern section (16).

7. Foot gear according to Claim 6, characterized in that in front of the mountings (26) a slit opening (25) is provided, via which the drawing means (22), which is guided on the front side through an opening (23) in the upper region of the pastern section (16), is able to be carried to the openings (26) lying one beneath the other.

8. Foot gear according to one of the preceding claims, characterized in that the sole (5) has at least one vertical depression (7) and/or at least one horizontal depression (9) arranged on the front edge of the foot gear, to receive a reinforcement.

9. Foot gear according to one of the preceding claims, characterized in that on the inner face of the sole (5) depressions (34) are arranged to receive padding, medicaments or the like.

10. Foot gear according to one of the preceding claims, characterized in that in the sole (5) perforations (35) are arranged for the removal of solid or liquid foreign bodies which have intruded.

EP 0 212 445 B1

Fig. 1

Fig. 2

Fig.3

Fig.4

Fig. 5